# EUROPEAN PATENT SPECIFICATION

(11) **EP 3 470 309 B1**
(45) Date of publication and mention of the grant of the patent: **15.07.2020**
(21) Application number: 18194523.9
(22) Date of filing: 14.09.2018
(51) Int. Cl.: B62D 49/00, B62D 25/12, E05B 35/00, E05B 83/42, E05B 83/24

(54) **WORK VEHICLE**
NUTZFAHRZEUG
VÉHICULE DE TRAVAIL

(30) Priority: 10.10.2017 JP 2017197021
(43) Date of publication of application: 17.04.2019
(73) Proprietor: Kubota Corporation, Osaka-shi, Osaka 556-8601 (JP)
(72) Inventor: TANIGAWA, Takuya, Osaka, 5900823 (JP)
(74) Representative: Müller-Boré & Partner Patentanwälte PartG mbB

(56) References cited:
- WO-A1-2011/080156
- JP-A- 2011 255 695
- JP-A- 2012 183 956

## Description

### [Technical field]

The present invention relates to a work vehicle comprising a vehicle body frame with a baseplate disposed on a front end thereof, a front-opening hood attached to a front side of the vehicle body frame so as to be capable of rocking upward and downward, and a lock mechanism for anchoring and holding the hood in a lower closed position.

### [Prior art]

One type of lock mechanism for such a work vehicle comprises a passive locking member anchored to the hood, a retaining locking member supported by an anchoring bracket of the vehicle frame so as to be capable of rocking between a lock position and a unlock position, a biasing spring that biases the retaining locking member back to the lock position, a manipulation tool enabling manipulation of the retaining locking member to the unlock position in resistance to the action of the biasing spring, and the like, the manipulation tool being projecting outward below a lower cover of the vehicle body frame from an elongated hole formed in the lower cover (for example, see Patent Document 1).

JP 2012 183956 A discloses a work vehicle according to the preamble of claim 1. In an operation for opening the hood, a push operation or rotation operation toward inside the hood is performed by means of a releasing member, and thereby a stopping state between a latch portion and a lock pin is released to allow an operation for opening the hood, wherein the releasing member is inserted from below the hood, thereby allowing the opening/closing mechanism to be released.

### [Prior art literature]

### [Patent literature]

[Patent Document 1] JP-A 2011-255695 (paragraphs [0018]-[0026], FIG. 3-8)

### [Summary of the invention]

### [Problem to be solved by the invention]

In the arrangement disclosed in Patent Document 1, the retention of the hood at the closed position by the lock mechanism can easily be released by pulling the projecting part of the manipulation tool projecting outward below the lower cover from the elongated hole in the cover in a direction against the action of the biasing spring.

On the other hand, with the configuration disclosed in Patent Document 1, because the manipulation tool enabling the unlocking of the lock mechanism projects partially outward, someone other than the user of the work vehicle is easily capable of releasing the anchoring of the hood at the closed position simply by manipulating the projecting part; thus, there is room for improvement in preventing the hood being opened by non-users.

In other words, there is a demand for the development of a hood lock mechanism that impedes release by non-users without inconveniencing the user.

### [Means for solving the problem]

The present invention is defined by independent claim 1. Preferred embodiments are defined in the dependent claims. In particular, there is provided a work vehicle comprising a vehicle body frame with a baseplate disposed on a front end thereof, a front-opening hood attached to a front side of the vehicle body frame so as to be capable of rocking upward and downward, and a lock mechanism for anchoring and holding the hood in a lower closed position; the lock mechanism comprising a first member mounted at a central location with respect to the left-right direction on an upper side of the baseplate so as to be capable of moving between a lock position and an unlock position, a second member anchored at a central location with respect to the left-right direction on a lower part of the front end of the hood, a biasing member for biasing the first member back to the lock position, and a manipulation tool for manipulating the first member to the unlock position in resistance to the action of the biasing member;
the first member engaging with the second member, thereby anchoring and retaining the hood at the closed position, by being positioned at the lock position through the action of the biasing member when the hood is positioned at the closed position, and disengaging from the second member, thereby releasing the anchoring and retention of the hood at the closed position, by being manipulated to the unlock position by the manipulation tool when the hood is anchored and retained at the closed position; a through-hole through which the manipulation tool is inserted and withdrawn being formed at a position on a left or right end of the baseplate; and the manipulation tool being configured so as to be capable of being inserted and withdrawn through the through-hole in a left or right upward diagonal direction from a position below the through-hole on the outside of one side of the vehicle body, and being inserted and withdrawn through the through-hole in the left or right upward diagonal direction to manipulate the first member to the unlock position, wherein the vehicle body frame is configured to enable an attachment of a front-mounted implement.

By virtue of this means, a user, when releasing the anchoring and retention of the hood at the closed position by the lock mechanism, is capable of manipulating the first member from the lock position to the unlock position by inserting the manipulation tool in a left or right upward diagonal direction through the through-hole from a position below the through-hole outside one side of the vehicle. Through this manipulation, the anchoring and retention of the hood at the closed position by the lock mechanism can be released, allowing the hood to be opened.

One possible lock mechanism is one in which the manipulation tool is, for example, capable of being inserted and withdrawn through the through-hole in the vertical direction from directly below the through-hole, and the for example is manipulated to the unlock position by inserting the manipulation tool upward from directly below the through-hole. However, in the case of a tractor, which is one kind of work vehicle, a front three-point hitch enabling the attachment of front-mounted implement such as a front mower may be attached to the front end of the vehicle body frame; in such cases, either the left or right lower link of the three-point hitch will be positioned directly below the through-hole, impeding the insertion of the manipulation tool upward from directly below the through-hole. This necessitates the inconvenience of removing the front three-point hitch from the front end of the vehicle body frame in order to allow the hood to be opened.

The means of the present invention described above was designed taking these considerations into account; thus, even if a left or right lower link of a front three-point hitch is positioned directly below the through-hole as described above, a user, when releasing the anchoring and retention of the hood at the closed position by the lock mechanism, is capable of manipulating the first member from the lock position to the unlock position without being impeded by the lower link positioned directly below the through-hole by inserting the manipulation tool through the through-hole in a left or right upward diagonal direction from a position below the through-hole to the outside of one side of the vehicle body so as to avoid the lower link positioned directly below the through-hole.

In other words, a user who possesses the manipulation tool and knows how to use the manipulation tool can use the manipulation tool to easily release the anchoring and retention of the hood at the closed position by the lock mechanism. A non-user who does not possess the manipulation tool and does not know how to use the manipulation tool is not capable of releasing the anchoring and retention of the hood at the closed position by the lock mechanism. As a result, it is possible to keep non-users from releasing the lock mechanism without inconveniencing the user.

As one means for making the present invention even more advantageous, the first member is supported by a front-to-back oriented shaft over the upper surface of the baseplate so as to be capable of rocking with the shaft as a fulcrum between the lock position and the unlock position.

By virtue of this means, a user, when releasing the anchoring and retention of the hood at the closed position by the lock mechanism, is capable of rocking the first member from the lock position to the unlock position by inserting the manipulation tool in a left or right upward diagonal direction through the through-hole from a position below the through-hole outside one side of the vehicle, thereby releasing the anchoring and retention of the hood at the closed position by the lock mechanism.

As a result, a simpler arrangement is achieved compared to one in which, for example, the first member is manipulated from the lock position to the unlock position by a sliding movement requiring multiple guide members, thereby improving the ease by which the first member can be manipulated by the manipulation tool inserted through the through-hole.

As one means for making the present invention even more advantageous, the baseplate comprises a guide tube, positioned at a location on a left or right end thereof, that is oriented in a left or right upward diagonal direction, and guides the manipulation tool in the left or right upward diagonal direction, the through-hole being formed in the inner circumferential surface of the guide tube.

By virtue of this means, a user, when releasing the anchoring and retention of the hood at the closed position by the lock mechanism, is capable of reliably inserting the manipulation tool in the left or right upward diagonal direction through the through-hole from a position below the through-hole outside one side of the vehicle simply by inserting the manipulation tool into the guide tube, and thus is capable of reliably manipulating the first member from the lock position to the unlock position.

As a result, the ease with which the first member can be manipulated using the manipulation tool is greatly improved.

As one means for making the present invention even more advantageous, the lock mechanism comprises a manipulator member that manipulates the first member to the unlock position, and a linking member that extends from the manipulator member to the through-hole, and is configured so that the first member is moved to the unlock position by a extending end of the linking member being pushed in the left or right upward diagonal direction by the manipulation tool inserted into the through-hole in the left or right upward diagonal direction.

By virtue of this means, the length of the manipulation tool can be shorter than in an arrangement in which the first member is directly manipulated by the manipulation tool, thereby making the manipulation tool easier to use, and making it easier to release the lock mechanism using the manipulation tool. Reducing the length of the manipulation tool also allows a common tool such as a screwdriver or a hexagonal wrench to be used as the manipulation tool.

As one means for making the present invention even more advantageous, the baseplate comprises a guide member for guiding the extending end of the linking member in the left or right upward diagonal direction.

By virtue of this means, the extending end of the linking member can be smoothly manipulated in the left or right upward diagonal direction by the manipulation tool inserted into the through-hole, by which the first member can be simply and reliably manipulated from the lock position to the unlock position.

As a result, the manipulation of the first member by the manipulation tool via the linking member can be performed simply and precisely.

As one means for making the present invention even more advantageous, the linking member comprises, on the extending end adjacent to the through-hole, a manipulated part that is pushed by the manipulation tool inserted through the through-hole, and the manipulated part is formed so as to have a bent shape comprising a sideways-facing V-shaped guide surface that guides the distal end of the manipulation tool with respect to the insertion direction to the extending end of the linking member.

By virtue of this means, when a user uses the manipulation tool to release the anchoring and retention of the hood at the closed position by the lock mechanism, the force of the manipulation tool inserted in the through-hole pushing on the manipulated part can be transmitted without loss from the distal end of the manipulation tool to the extending end of the linking member via the manipulated part.

As a result, the ease with which the first member can be manipulated via the linking member using the manipulation tool is greatly improved.

### [Brief Description of the Drawings]

FIG. 1 is a left side elevation view of a tractor.
FIG. 2 is a left-side longitudinal cross-sectional view of a prime mover section.
FIG. 3 is a longitudinal front view of the main parts of the configuration of a lock mechanism.
FIG. 4 is a head-on view of a lock mechanism, and the like, illustrating a first member positioned at a lock position.
FIG. 5 is a head-on view of a lock mechanism, and the like, illustrating a first member that has been manipulated to an unlock position.
FIG. 6 is a longitudinal left-side view of a hood in a closed position, and the main parts of a compression spring, and the like, that receive and support a lower part of the front end of a hood in the vicinity thereof.

### [Best mode for embodying the invention]

An embodiment of the present invention applied to a tractor, which is an example of a work vehicle, will be described hereafter with reference to the drawings as an example of one mode for embodying the invention.

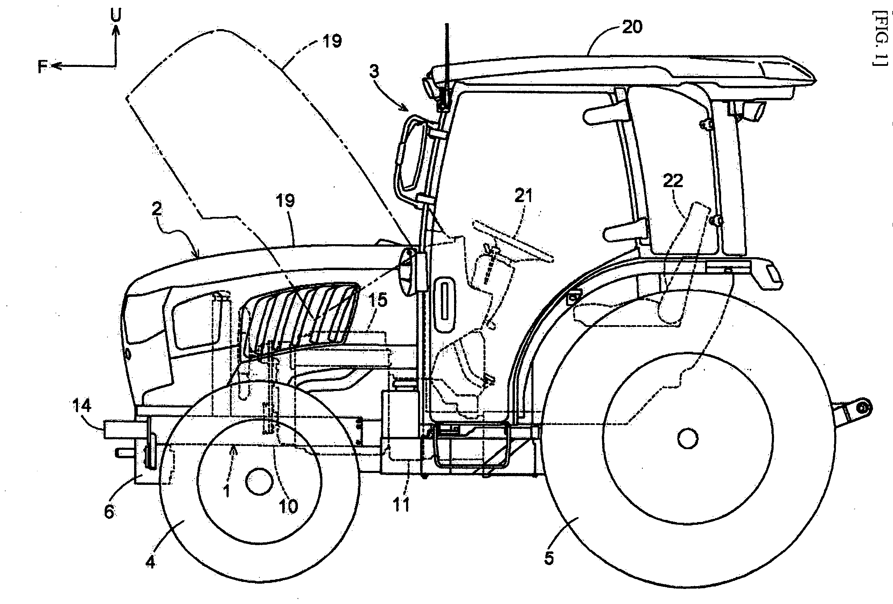

The direction indicated by the arrow labeled F in FIG. 1 is the front of the tractor, and the direction indicated by the arrow labeled U is the upper side of the tractor.

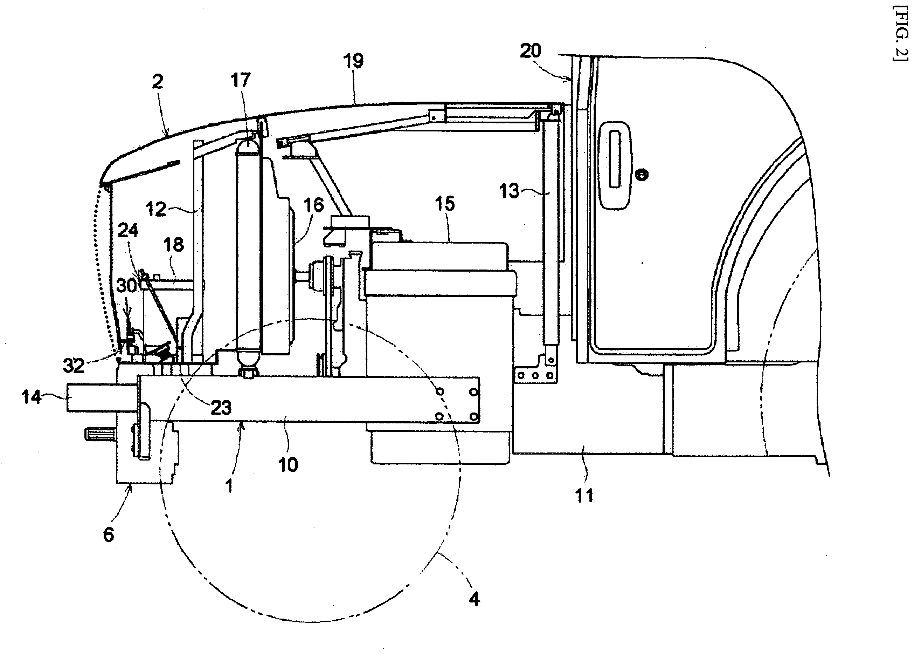

As illustrated in FIGS. 1 and 2, the tractor exemplified in the present embodiment comprises a vehicle body frame 1 forming the skeleton of the vehicle body, a prime mover section 2 disposed in the front half of the vehicle body frame 1, a ridden operation section 3 disposed in the rear half of the vehicle body frame 1, left and right front wheels 4 drivably and steerably disposed to the left and right of the prime mover section 2, left and right rear wheels 5 drivably disposed to the left and right of the operation section 3, a work-power-transmitting front PTO unit 6 disposed in a lower part of the front end of the vehicle body, and the like.

The vehicle body frame 1 comprises a front frame section 10 that supports the prime mover section 2, a transmission case (hereafter abbreviated as "T/M case") 11 that doubles as a rear frame section, an upright gate-shaped front pillar 12 provided on a front end of a front frame section 10, an upright arch-shaped center pillar 13 provided on a front end of the T/M case 11, a bumper 14 coupled to the front end of the front frame section 10, and the like.

The prime mover section 2 comprises an engine 15 coupled to the rear of the front frame section 10, a cooling fan 16 disposed at a location directly in front of the engine 15, a radiator 17 disposed at a location direction in front of the cooling fan 16, a battery 18 disposed in front of the radiator 17, a front-opening hood 19 attached to the center pillar 13 so as to be capable of rocking upward and downward, and the like.

The operation section 3 comprises a cabin 20 supported in a vibration-damping manner by the T/M case 11, a steering wheel 21, disposed to the front side of the interior of the cabin 20, for steering the front wheels, an operator seat 22 disposed to the rear side of the interior of the cabin 20, and the like.

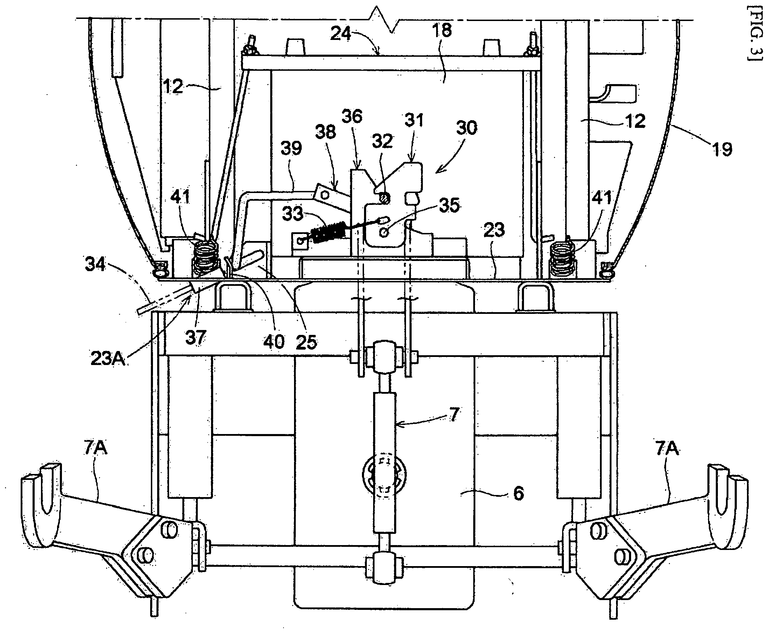

In the prime mover section 2, as illustrated in FIGS. 2 and 3, the battery 18 is provided on a baseplate 23 which also functions as a battery platform disposed at the front end of the vehicle body frame 1. The battery 18 is anchored on the baseplate 23 by a battery anchoring unit 24.

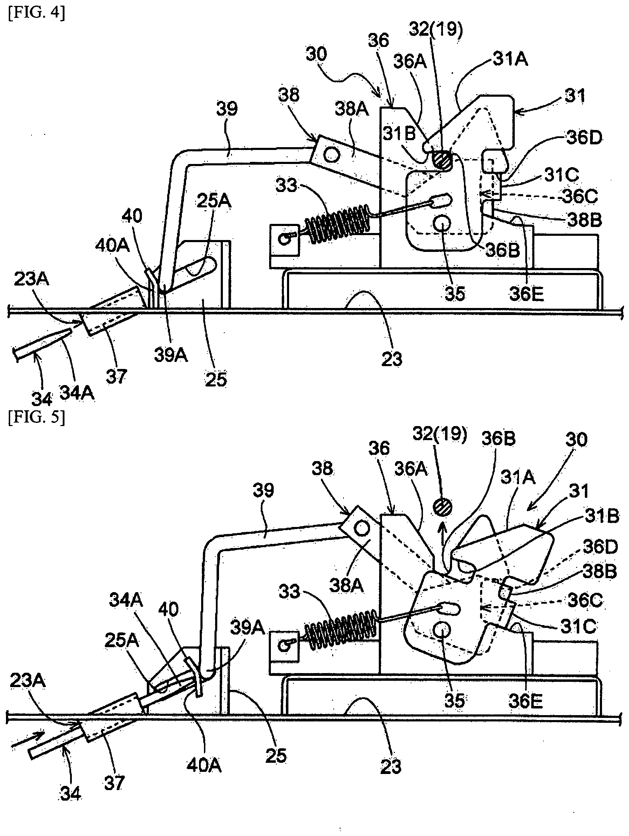

As seen in FIGS. 2-5, the prime mover section 2 comprises a lock mechanism 30 that anchors and retains the hood 19 at a lower closed position. The lock mechanism 30 comprises a first member 31 mounted at a central location with respect to the left-right direction on an upper side of the baseplate 23 so as to be capable of moving between a lock position and an unlock position, a second member 32 anchored at a central location with respect to the left-right direction on a lower part of the front end of the hood 19, a biasing member 33 for biasing the first member 31 back to the lock position, a manipulation tool 34 for manipulating the first member 31 to the unlock position against the action of the biasing member 33, and the like.

The lower part of the first member 31 is supported by an anchoring member 36 via a front-to-back oriented shaft 35 so as to be capable of rocking with the shaft 35 as a fulcrum between the lock position and the unlock position. A right downward slanting linking part 31A and a hook-shaped engaging part 31B that engages with the second member 32 are formed on an upper part of the first member 31 constituting a free end. The second member 32 is constituted by a round steel bar member that extends downward from a central location with respect to the left-right direction of the lower part of the front end of the hood 19. The biasing member 33 is constituted by a tension spring linking a right end of the anchoring member 36 and the free end of the first member 31. The anchoring member 36 is provided upright at a central location with respect to the left-right direction on the upper surface of the front end of the baseplate 23. A V-shaped guide part 36A for guiding the second member 32 that rocks downward with the hood 19 to an engagement position in the center with respect to the left-right direction, and a receiving part 36B that receives and stops the second member 32 at the engagement position are formed in a recess in the anchoring member 36.

By virtue of the configuration described above, when a user closes the hood 19, the second member 32 that rocks downward with the hood 19 contacts the linking part 31A of the first member 31, and, as a result of this contact, the first member 31 is rocks from the lock position to the unlock position against the action of the biasing member 33. The second member 32 contacts the guide part 36A of the anchoring member 36, and is guided to the engagement position at the center with respect to the left-right direction. When the hood 19 subsequently reaches the closed position, the second member 32 passes the right end of the linking part 31A to reach the engagement position, and, as a result, the second member 32 is received and stopped at the engagement position by the receiving part 36B of the anchoring member 36, and the first member 31 rocks from the unlock position back to the lock position by the action of the biasing member 33, which causes the engaging part 31B of the first member 31 to engage with the second member 32.

In other words, the configuration is such that when the user closes the hood 19, the action of the lock mechanism 30 causes the hood 19 to be automatically anchored and retained at the lower closed position when the hood 19 reaches the closed position.

As illustrated in FIGS. 3-5, the lock mechanism 30 is configured so that, when the hood 19 is positioned at the closed position, the first member 31 is positioned at the lock position by the action of the biasing member 33, thereby engaging with the second member 32 and anchoring and retaining the hood 19 at the closed position. When the hood 19 is being anchored and retained at the closed position, and the first member 31 is manipulated to the unlock position by the manipulation tool 34, the engagement with the second member 32 is released, and the anchoring and retention of the hood 19 at the closed position is released.

In other words, a user, when opening the hood 19, can use the manipulation tool 34 to manipulate the first member 31 from the lock position to the unlock position, thereby releasing the anchoring and retention of the hood 19 at the closed position by the lock mechanism 30, and allowing the hood 19 to be opened to an upper open position.

As illustrated in FIGS. 2-5, the baseplate 23 is disposed on the front end of the vehicle body frame 1 so that the lock mechanism 30 disposed on the upper surface thereof is concealed from below. A through-hole 23A through which the manipulation tool 34 can be inserted and withdrawn is formed at a location on the right end side of the baseplate 23. The manipulation tool 34 is configured so as to be capable of being inserted and withdrawn through the through-hole 23A in a left or right upward diagonal direction from a position below the through-hole 23A on the outside of one side of the vehicle body, and being inserted and withdrawn through the through-hole 23A in the left or right upward diagonal direction to manipulate the first member 31 to the unlock position.

By virtue of the arrangement described above, a user, when releasing the anchoring and retention of the hood 19 at the closed position by the lock mechanism 30, is capable of manipulating the first member 31 from the lock position to the unlock position by inserting the manipulation tool 34 in a left upward diagonal direction through the through-hole 23A from a position below the through-hole 23A outside the right side of the vehicle. Through this manipulation, the anchoring and retention of the hood 19 at the closed position by the lock mechanism 30 can be released, allowing the hood 19 to be opened.

In addition, the direction in which the manipulation tool 34 is used to release the lock mechanism 30 is the left upward diagonal direction, so that even if, as illustrated in FIG. 3, a front three-point hitch 7 or the like enabling the attachment of a front-mounted implement such as a front mower (not illustrated in the drawings) is attached to the front end of the vehicle body frame 1, and a right lower link 7A of the front three-point hitch 7 is positioned directly below the through-hole 23A, a user, when releasing the anchoring and retention of the hood 19 at the closed position by the lock mechanism 30, is capable of manipulating the first member 31 from the lock position to the unlock position without being impeded by the lower link 7A positioned directly below the through-hole 23A by inserting the manipulation tool 34 through the through-hole 23A in the left upward diagonal direction from a position below the through-hole 23A to the outside of the right side of the vehicle body so as to avoid the lower link 7A positioned directly below the through-hole 23A.

In other words, a user who possesses the manipulation tool 34 and knows how to use the manipulation tool 34 can use the manipulation tool 34 to easily release the anchoring and retention of the hood 19 at the closed position by the lock mechanism 30. A non-user who does not possess the manipulation tool 34 and does not know how to use the manipulation tool 34 is not capable of releasing the anchoring and retention of the hood 19 at the closed position by the lock mechanism 30. As a result, it is possible to keep non-users from releasing the lock mechanism 30 without inconveniencing the user.

As illustrated in FIGS. 3-5, the baseplate 23 comprises a guide tube 37 that is positioned at a position on the right end thereof in a left upward diagonal orientation and guides the manipulation tool 34 in the upper left diagonal direction. The through-hole 23A is formed in the inner circumferential surface of the guide tube 37.

By virtue of this arrangement, a user, when releasing the anchoring and retention of the hood 19 at the closed position by the lock mechanism 30, is capable of reliably inserting the manipulation tool 34 in the left upward diagonal direction through the through-hole from 23A at a position below the through-hole 23A outside the right side of the vehicle simply by inserting the manipulation tool 34 into the guide tube 37, and thus is capable of reliably manipulating the first member 31 from the lock position to the unlock position. As a result, the ease with which the first member 31 can be manipulated using the manipulation tool 34 is greatly improved.

As illustrated in FIGS. 3-5, the lock mechanism 30 comprises a manipulator member 38 that manipulates the first member 31 to the unlock position, and a linking member 39 that extends from the manipulator member 38 to the through-hole 23A. The mechanism is configured so that the first member 31 is moved to the unlock position by a right end 39A constituting an extending end of the linking member 39 being pushed in the left upward diagonal direction by the manipulation tool 34 inserted into the through-hole 23A in the left upward diagonal direction.

By virtue of this arrangement, the length of the manipulation tool 34 can be shorter than in an arrangement in which the first member 31 is directly manipulated by the manipulation tool 34, thereby making the manipulation tool 34 easier to use, and making it easier to release the lock mechanism 30 using the manipulation tool 34. Reducing the length of the manipulation tool 34 also allows a common tool such as a screwdriver or a hexagonal wrench to be used as the manipulation tool 34.

As illustrated in FIGS. 3-5, the lower side of the manipulator member 38 is supported by the anchoring member 36 via the shaft 35 so that the manipulator member 38 rocks with the shaft 35 as a fulcrum. The manipulator member 38 has an arm 38A that extends in a right upward direction from the upper part thereof. The linking member 39 is constituted by a round steel bar member formed so as to flex from the extending end of the arm 38A toward the through-hole 23A. The first member 31 comprises a receiving part 31C that receives and stops a left end edge 38B of the upper part (free end) of the manipulator member 38.

In this arrangement, the lock mechanism 30 is configured so that, when the right end 39A of the linking member 39 is pushed in the left upward diagonal direction by the manipulation tool 34 inserted through the through-hole 23A in the left upward diagonal direction, the manipulator member 38 concurrently rocks left with the shaft 35 as a fulcrum, and the receiving part 31C of the first member 31 is pushed leftward by the manipulator member 38 in tandem with said rocking, thereby rocking the first member 31 from the lock position to the unlock position in resistance to the action of the biasing member 33. As a result, the anchoring and retention of the hood 19 at the closed position by the lock mechanism 30 is released. When the pushing upon the linking member 39 by the manipulation tool 34 is released, the first member 31 is rocked back from the unlock position to the lock position through the action of the biasing member 33, and, as a result, the manipulator member 38 is pushed to the right by the receiving part 31C of the first member 31, and the manipulator member 38 rocks to the right the shaft 35 as a fulcrum. In tandem with this rocking, the linking member 39 moves in a right downward diagonal direction, so that the right end 39A of the linking member 39 approaches the through-hole 23A.

As illustrated in FIGS. 3-5, the baseplate 23 comprises a guide member 25 that guides the right end 39A of the linking member 39 in the left upward diagonal direction. Thus, the right end 39A of the linking member 39 can be smoothly manipulated in the left upward diagonal direction by the manipulation tool 34 inserted into the through-hole 23A, by which the first member 31 can be simply and reliably manipulated from the lock position to the unlock position. As a result, the manipulation of the first member 31 by the manipulation tool 34 via the linking member 39 can be performed simply and precisely.

The guide member 25 comprises an elongated hole 25A slanted left and upward, and is provided upright on the right end of the baseplate 23. The guide member 25 guides the right end 39A of the linking member 39 inserted into the elongated hole 25A in the upper left diagonal direction when unlocking using the manipulation tool 34, and in the lower right diagonal direction when locking through the action of the biasing member 33.

As illustrated in FIG. 3-5, the linking member 39 comprises, on the right end 39A adjacent to the through-hole 23A, a manipulated part 40 that is pushed by the manipulation tool 34 inserted into the through-hole 23A. The manipulated part 40 is formed so as to have a bent shape comprising a sideways-facing V-shaped guide surface 40A that guides a distal end 34A of the manipulation tool 34 with respect to the insertion direction to the right end 39A of the linking member 39.

By virtue of this arrangement, when a user uses the manipulation tool 34 to release the anchoring and retention of the hood 19 at the closed position by the lock mechanism 30, the force of the manipulation tool 34 inserted in the through-hole 23A pushing on the manipulated part 40 can be transmitted without loss from the distal end of the manipulation tool 34 to the right end 39A of the linking member 39 via the manipulated part 40. As a result, the ease with which the first member 31 can be manipulated via the linking member 39 using the manipulation tool 34 is greatly improved.

As illustrated in FIGS. 3-5, the anchoring member 36 comprises a first stopper section 36D that, by virtue of a recession 36C formed in a left end thereof, receives and stops the receiving part 31C of the first member 31 when the formation reaches the lock position, and a second stopper section 36E that receives and stops the receiving part 31C of the first member 31 when the first member 31 reaches the unlock position. As a result, the rocking range of the first member 31 is restricted to the range between the lock position and the unlock position.

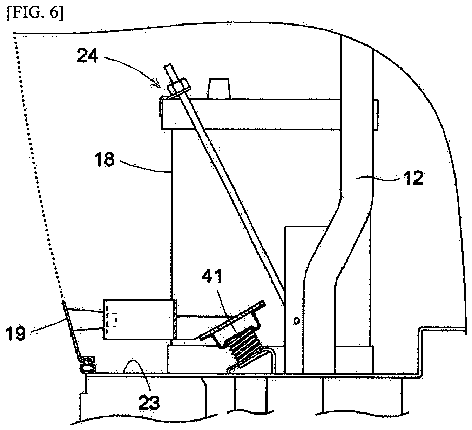

As illustrated in FIGS. 3 and 6, the baseplate 23 comprises left and right compression springs 41 that receive and support left and right end locations of the lower part of the front end of the hood 19 in the closed position of the hood 19 and the vicinity thereof. As the anchoring and retention of the hood 19 at the closed position by the lock mechanism 30 is released, the left and right compression springs 41 push the hood 19 upward from the closed position, thereby receiving and holding the hood 19 at a partially open position slightly above the closed position. The left and right compression springs 41 permit rocking displacement of the hood 19 toward the closed position when the hood 19 is rocked downward against the action of the springs.

By virtue of the arrangement described above, when the anchoring and retention of the hood 19 at the closed position by the lock mechanism 30 is released, the hood 19 is positioned at the partially open position through the action of the left and right compression springs 41, thereby keeping the second member 32 at a position slightly above the engagement position of the anchoring member 36, and preventing the first member 31 and engaging part 31B from engaging even when the first member 31 is rocked back to the lock position by the action of the biasing member 33. As a result, it is possible to prevent the occurrence of the inconvenience of the hood 19 again being anchored and retained at the closed position by the lock mechanism 30 when the first member 31 is rocked back to the lock position through the action of the biasing member 33 due to the hood 19 still being positioned at the closed position even after the lock mechanism 30 has been released.

Through the action of the left and right compression springs 41 when the hood 19 is being anchored and retained at the closed position, it is also possible to prevent rattling of the second member 32 in the vertical direction between the anchoring member 36 and the first member 31 in the lock position from occurring, and to prevent the production of noise caused by said rattling.

### [Other embodiments]

The present invention is not limited to the configuration of the embodiment exemplified above. Other representative embodiments of the present invention will be exemplified hereafter.
[1] Other representative embodiments of the configuration of the work vehicle are as follows.
   The work vehicle may be, for example, a semi-crawler type vehicle comprising left and right crawlers instead of left and right rear wheels 5. The work vehicle may be, for example, a full-crawler type vehicle comprising left and right crawlers instead of left and right front wheels 4 and left and right rear wheels 5. The work vehicle may be, for example, an electric vehicle comprising an electric motor instead of the engine 15. The work vehicle may be, for example, a hybrid vehicle comprising an engine 15 and an electric motor. The work vehicle may comprise, for example, an automatic operation system enabling the vehicle to travel automatically.
[2] Other representative embodiments of the configuration of the lock mechanism 30 are as follows. The first member 31 of the lock mechanism 30 may be mounted at a central location with respect to the left-right direction on an upper side of the baseplate 23 so as to be capable, for example, of sliding between the lock position and the unlock position. The second member 32 may be constituted, for example, by a square steel bar member or a steel strip member that extends downward from a central location with respect to the left-right direction of the lower part of the front end of the hood 19. The biasing member 33 of the lock mechanism 30 may be constituted, for example, by a compression spring, a torsion spring, or the like. The through-hole 23A through which the manipulation tool 34 is inserted and withdrawn may be formed, for example, on a left end side of the baseplate 23, and the manipulation tool 34 may be configured, for example, so that so as to be capable of being inserted and withdrawn through the through-hole 23A in a right upward diagonal direction from a position below the through-hole 23A on the outside of the left side of the vehicle body, and being inserted and withdrawn through the through-hole 23A in the right upward diagonal direction to manipulate the first member 31 from the lock position to the unlock position. The lock mechanism 30 may be configured, for example, so as to comprise only the manipulator member 38 instead of both the linking member 39 and the manipulator member 38, with the first member 31 being moved from the lock position to the unlock position as the result of the arm 38A of the manipulator member 38 being pushed in the left or right upward diagonal direction by the manipulation tool 34 inserted into the through-hole 23A in the left or right upward diagonal direction. In this arrangement, the arm 38A of the manipulator member 38 may comprise the manipulated part 40 pushed by the manipulation tool 34. The lock mechanism 30 may be configured, for example, so as to comprise neither the linking member 39 nor the manipulator member 38, with the first member 31 being moved from the lock position to the unlock position by being directly pushed in the left or right upward diagonal direction by the manipulation tool 34 inserted into the through-hole 23A in the left or right upward diagonal direction. In this arrangement, the first member 31 may comprise the manipulated part 40 pushed by the manipulation tool 34.
[3] The manipulated part 40 may be formed, for example, so as to have a curved shape comprising a sideways-facing U-shaped guide surface 40A that guides the distal end 34A of the manipulation tool 34 with respect to the insertion direction to the extending end 39A of the linking member 39.
[4] Other representative embodiments of the configuration of the baseplate 23 are as follows. The baseplate 23 may, for example, not comprise a guide tube 37, and have only the through-hole 23A formed therein. The baseplate 23 may, for example, both have a through-hole 23A formed therein, and comprise a guide member for guiding the manipulation tool 34 in the left or right upward diagonal direction instead of the guide tube 37. The baseplate 23 may comprise, for example, a guide member 25 in which is formed a guide groove for engaging with and guiding the extending end 39A of the linking member 39 in the left or right upward diagonal direction instead of a guide member 25 in which is formed an elongated hole 25A.

### [Industrial Applicability]

The present invention can be applied to a work vehicle, such as a tractor or riding lawn mower, that comprises a vehicle body frame with a baseplate disposed on a front end thereof, a front-opening hood attached to a front side of the vehicle body frame so as to be capable of rocking upward and downward, and a lock mechanism for anchoring and holding the hood in a lower closed position.

### [Reference labels]

- 1:: Vehicle body frame
- 19:: Hood
- 23:: Baseplate
- 23A:: Through-hole
- 25:: Guide member
- 30:: Lock mechanism
- 31:: First member
- 32:: Second member
- 33:: Biasing member
- 34:: Manipulation tool
- 34A:: Distal end
- 35:: Shaft
- 37:: Guide tube
- 38:: Manipulator member
- 39:: Linking member
- 39A:: Extending end
- 40:: Manipulated part
- 40A:: Guide surface

## Claims

1. A work vehicle comprising:
a vehicle body frame (1) with a baseplate (23) disposed on a front end thereof, a front-opening hood (19) attached to a front side of the vehicle body frame (1) so as to be capable of rocking upward and downward, and a lock mechanism (30) for anchoring and holding the hood (19) in a lower closed position; the lock mechanism (30) comprising a first member (31) mounted at a central location with respect to the left-right direction on an upper side of the baseplate (23) so as to be capable of moving between a lock position and an unlock position, a second member (32) anchored at a central location with respect to the left-right direction on a lower part of the front end of the hood (19), a biasing member (33) for biasing the first member (31) back to the lock position, and a manipulation tool for manipulating the first member (31) to the unlock position in resistance to the action of the biasing member (33); the first member (31) engaging with the second member (32), thereby anchoring and retaining the hood (19) at the closed position, by being positioned at the lock position through the action of the biasing member (33) when the hood (19) is positioned at the closed position, and disengaging from the second member (32), thereby releasing the anchoring and retention of the hood (19) at the closed position, by being manipulated to the unlock position by the manipulation tool (34) when the hood (19) is anchored and retained at the closed position;
**Characterised by** a through-hole (23A) through which the manipulation tool (34) is inserted and withdrawn being formed at a position on a left or right end of the baseplate (23); and the manipulation tool (34) being configured so as to be capable of being inserted and withdrawn through the through-hole (23A) in a left or right upward diagonal direction from a position below the through-hole (23A) on the outside of one side of the vehicle body, and being inserted and withdrawn through the through-hole (23A) in the left or right upward diagonal direction to manipulate the first member (31) to the unlock position,
wherein the vehicle body frame (1) is configured to enable an attachment of a front-mounted implement.

2. The work vehicle according to claim 1, wherein the first member (31) is supported by a front-to-back oriented shaft (35) over the upper surface of the baseplate so as to be capable of rocking with the shaft (35) as a fulcrum between the lock position and the unlock position.

3. The work vehicle according to claim 1 or 2, wherein the baseplate (23) comprises a guide tube (37), positioned at a location on a left or right end thereof, that is oriented in a left or right upward diagonal direction, and guides the manipulation tool (34) in the left or right upward diagonal direction, the through-hole (23A) being formed in the inner circumferential surface of the guide tube (37).

4. The work vehicle according to any one of claims 1-3, wherein the lock mechanism (30) comprises a manipulator member (38) that manipulates the first member (31) to the unlock position, and a linking member (39) that extends from the manipulator member (38) to the through-hole (23A), and is configured so that the first member (31) is moved to the unlock position by a extending end (39A) of the linking member (39) being pushed in the left or right upward diagonal direction by the manipulation tool (34) inserted into the through-hole (23A) in the left or right upward diagonal direction.

5. The work vehicle according to claim 4, wherein the baseplate (23) comprises a guide member (25) for guiding the extending end (39A) of the linking member (39) in the left or right upward diagonal direction.

6. The work vehicle according to claim 4 or 5, wherein:
the linking member (39) comprises, on the extending end (39A) adjacent to the through-hole (23A), a manipulated part (40) that is pushed by the manipulation tool (34) inserted through the through-hole (23A), and
the manipulated part (40) is formed so as to have a bent shape comprising a sideways-facing V-shaped guide surface (40A) that guides the distal end (34A) of the manipulation tool (34) with respect to the insertion direction to the extending end (39A) of the linking member (39).

## Patentansprüche

1. Arbeitsfahrzeug umfassend:
einen Fahrzeugkarosserierahmen (1) mit einer Grundplatte (23), die an einem Vorderende davon angeordnet ist, eine Fronthaube (19), die an einer Vorderseite des Fahrzeugkarosserierahmens (1) so befestigt ist, dass sie in der Lage ist, sich aufwärts und abwärts hin- und herzubewegen, und einen Verriegelungsmechanismus (30) zum Verankern und Halten der Haube (19) in einer unteren geschlossenen Position; wobei der Verriegelungsmechanismus (30) umfasst: ein erstes Element (31), das an einer zentralen Stelle in Bezug auf die Links-Rechts-Richtung auf einer Oberseite der Grundplatte (23) so montiert ist, dass es in der Lage ist, sich zwischen einer Verriegelungsposition und einer Entriegelungsposition zu bewegen, ein zweites Element (32), das an einer zentralen Stelle in Bezug auf die Links-Rechts-Richtung an einem unteren Teil des Vorderendes der Haube (19) verankert ist, ein Vorspannelement (33) zum Vorspannen des ersten Elements (31) zurück in die Verriegelungsposition, und ein Handhabungswerkzeug zum Handhaben des ersten Elements (31) in die Entriegelungsposition im Widerstand gegen die Wirkung des Vorspannelements (33); wobei das erste Element (31) mit dem zweiten Element (32) in Eingriff ist, wodurch die Haube (19) in der geschlossenen Position verankert und gehalten wird, indem es durch die Wirkung des Vorspannelements (33) in der Verriegelungsposition positioniert wird, wenn die Haube (19) in der geschlossenen Position positioniert ist, und mit dem zweiten Element (32) außer Eingriff ist, wodurch die Verankerung und Halterung der Haube (19) in der geschlossenen Position gelöst wird, indem es durch das Handhabungswerkzeug (34) in die Entriegelungsposition gehandhabt wird, wenn die Haube (19) in der geschlossenen Position verankert und gehalten wird;
**dadurch gekennzeichnet, dass** eine Durchgangsbohrung (23A), durch die das Handhabungswerkzeug (34) eingeführt und herausgezogen wird, an einer Position auf einem linken oder rechtem Ende der Grundplatte (23) gebildet wird;
und das Handhabungswerkzeug (34) so ausgestaltet ist, dass es in der Lage ist, durch die Durchgangsbohrung (23A) in einer Links- oder Rechts-Aufwärts-Diagonal-Richtung von einer Position unterhalb der Durchgangsbohrung (23A) auf der Außenseite einer Seite der Fahrzeugkarosserie eingeführt und herausgezogen zu werden und durch die Durchgangsbohrung (23A) in der Links- oder Rechts-Aufwärts-Diagonal-Richtung eingeführt und herausgezogen zu werden, um das erste Element (31) in die Entriegelungsposition zu handhaben,
wobei der Fahrzeugkarosserierahmen (1) ausgestaltet ist, eine Befestigung eines Geräts zum vorderseitigen Anbau zu ermöglichen.

2. Arbeitsfahrzeug nach Anspruch 1, wobei das erste Element (31) von einer von vorn nach hinten ausgerichteten Welle (35) über der oberen Oberfläche der Grundplatte getragen wird, sodass es in der Lage ist, sich mit der Welle (35) als Drehpunkt zwischen der Verriegelungsposition und der Entriegelungsposition hin- und herzubewegen.

3. Arbeitsfahrzeug nach Anspruch 1 oder 2, wobei die Grundplatte (23) ein Führungsrohr (37) umfasst, das an einer Stelle an einem linken oder rechten Ende von ihr positioniert ist, das in eine Links- oder Rechts-Aufwärts-Diagonal-Richtung ausgerichtet ist und das Handhabungswerkzeug (34) in die Links- oder Rechts-Aufwärts-Diagonal-Richtung führt, wobei die Durchgangsbohrung (23A) in der inneren Umfangsoberfläche des Führungsrohrs (37) gebildet ist.

4. Arbeitsfahrzeug nach einem beliebigen der Ansprüche 1 bis 3, wobei der Verriegelungsmechanismus (30) ein Handhabungselement (38), das das erste Element (31) in die Entriegelungsposition handhabt, und ein Verbindungselement (39) umfasst, das sich von dem Handhabungselement (38) zu der Durchgangsbohrung (23A) erstreckt und so ausgestaltet ist, dass das erste Element (31) von einem Erstreckungsende (39A) des Verbindungselements (39) in die Entriegelungsposition bewegt wird, das von dem Handhabungswerkzeug (34), das in die Durchgangsbohrung (23A) in die Links- oder Rechts-Aufwärts-Diagonal-Richtung eingeführt ist, in die Links- oder Rechts-Aufwärts-Diagonal-Richtung gedrückt wird.

5. Arbeitsfahrzeug nach Anspruch 4, wobei die Grundplatte (23) ein Führungselement (25) zum Führen des Erstreckungsendes (39A) des Verbindungselements (39) in die Links- oder Rechts-Aufwärts-Diagonal-Richtung umfasst.

6. Arbeitsfahrzeug nach Anspruch 4 oder 5, wobei:
das Verbindungselement (39) auf dem Erstreckungsende (39A) benachbart zu der Durchgangsbohrung (23A) einen gehandhabten Teil (40) umfasst, der von dem Handhabungswerkzeug (34), das durch die Durchgangsbohrung (23A) eingeführt ist, gedrückt wird, und
der gehandhabte Teil (40) so gebildet ist, dass er eine gebogene Form aufweist, die eine seitwärts weisende, V-förmige Führungsoberfläche (40A) umfasst, die das distale Ende (34A) des Handhabungswerkzeugs (34) in Bezug auf die Einführungsrichtung zu dem Erstreckungsende (39A) des Verbindungselements (39) führt.

## Revendications

1. Véhicule de travail comportant :
un châssis de carrosserie de véhicule (1) avec une plaque de base (23) disposée sur une extrémité avant de celui-ci, un capot à ouverture par l'avant (19) attaché à un côté avant du châssis de carrosserie de véhicule (1), de manière à pouvoir basculer vers le haut et vers le bas, et un mécanisme de verrouillage (30) pour ancrer et maintenir le capot (19) dans une position fermée inférieure; le mécanisme de verrouillage (30) comportant un premier élément (31) monté au niveau d'un emplacement central par rapport à la direction gauche-droite sur un côté supérieur de la plaque de base (23), de manière à pouvoir se déplacer entre une position de verrouillage et une position de déverrouillage, un second élément (32) ancré au niveau d'un emplacement central par rapport à la direction gauche-droite sur une partie inférieure de l'extrémité avant du capot (19), un élément de sollicitation (33) pour solliciter le premier élément (31) à revenir vers la position de verrouillage et un outil de manipulation pour manipuler le premier élément (31) vers la position de déverrouillage en résistance à l'action de l'élément de sollicitation (33) ; le premier élément (31) venant en prise avec le second élément (32), permettant ainsi d'ancrer et de retenir le capot (19) dans la position fermée, en étant positionné dans la position de verrouillage à travers l'action de l'élément de sollicitation (33) lorsque le capot (19) est positionné dans la position fermée et se désolidarisant d'avec le second élément (32), ce qui libère l'ancrage et la retenue du capot (19) dans la position fermée en étant manipulé vers la position de déverrouillage par l'outil de manipulation (34) lorsque le capot (19) est ancré et retenu dans la position fermée ;
**caractérisé par** un trou traversant (23A) à travers lequel l'outil de manipulation (34) est inséré et retiré, formé dans une position sur une extrémité gauche ou droite de la plaque de base (23) ; et l'outil de manipulation (34) étant conçu de manière à pouvoir être inséré et retiré à travers le trou traversant (23A) dans une direction diagonale montante gauche ou droite à partir d'une position au-dessous du trou traversant (23A) sur l'extérieur d'un côté de la carrosserie de véhicule et étant inséré et retiré à travers le trou traversant (23A) dans la direction diagonale montante gauche ou droite pour manipuler le premier élément (31) vers la position de déverrouillage,
dans lequel le châssis de carrosserie de véhicule (1) est conçu pour permettre une fixation d'un accessoire monté à l'avant.

2. Véhicule de travail selon la revendication 1, dans lequel le premier élément (31) est supporté par un arbre orienté d'avant en arrière (35) sur la surface supérieure de la plaque de base, de manière à pouvoir basculer avec l'arbre (35) en tant que pivot entre la position de verrouillage et la position de déverrouillage.

3. Véhicule de travail selon la revendication 1 ou 2, dans lequel la plaque de base (23) comporte un tube de guidage (37) positionné en un emplacement sur une extrémité gauche ou droite de celle-ci, qui est orienté dans une direction diagonale montante gauche ou droite et guide l'outil de manipulation (34) dans la direction diagonale montante gauche ou droite, le trou traversant (23A) étant formé dans la surface circonférentielle interne du tube de guidage (37).

4. Véhicule de travail selon l'une quelconque des revendications 1 à 3, dans lequel le mécanisme de verrouillage (30) comporte un élément manipulateur (38) qui manipule le premier élément (31) vers la position de déverrouillage et un élément de liaison (39) qui s'étend de l'élément manipulateur (38) au trou traversant (23A) et est conçu de sorte que le premier élément (31) soit déplacé vers la position de déverrouillage par une extrémité d'extension (39) de l'élément de liaison (39) qui est poussée dans la direction diagonale montante gauche ou droite par l'outil de manipulation (34) inséré dans le trou traversant (23A) dans la direction diagonale montante gauche ou droite.

5. Véhicule de travail selon la revendication 4, dans lequel la plaque de base (23) comporte un élément de guidage (25) pour guider l'extrémité d'extension (39A) de l'élément de liaison (39) dans la direction diagonale montante gauche ou droite.

6. Véhicule de travail selon la revendication 4 ou 5, dans lequel :
l'élément de liaison (39) comporte, sur l'extrémité d'extension (39A) adjacente au trou traversant (23A), une partie manipulée (40) qui est poussée par l'outil de manipulation (34) inséré à travers le trou traversant (23A) et
la partie manipulée (40) est formée de manière à avoir une forme courbée comportant une surface de guidage en forme de V face vers le côté (40A) qui guide l'extrémité distale (34A) de l'outil de manipulation (34) par rapport à la direction d'insertion vers l'extrémité d'extension (39A) de l'élément de liaison (39).
